# EUROPEAN PATENT SPECIFICATION

(11) **EP 0 782 951 B1**
(45) Date of publication and mention of the grant of the patent: **30.08.2000**
(21) Application number: 96309586.4
(22) Date of filing: 31.12.1996
(51) Int. Cl.: B62D 1/18

(54) **Vehicle steering column assembly**
Kraftfahrzeug-Lenksäuleneinheit
Ensemble d'une colonne de direction d'un véhicule

(30) Priority: 03.01.1996 GB 9600038
(43) Date of publication of application: 09.07.1997
(73) Proprietor: Nastech Europe Limited, Coventry, Warwickshire CV4 9AE (GB)
(72) Inventor: Barton, Laurence George Herbert, Leamington Spa, Warwickshire, CV32 5XA (GB)
(74) Representative: Feakins, Graham Allan

(56) References cited:
- EP-A- 0 557 767
- WO-A-95/01901
- PATENT ABSTRACTS OF JAPAN vol. 096, no. 001, 31 January 1996 & JP 07 232649 A (FUJI KIKO CO LTD), 5 September 1995, & US 5 503 431 A (YAMAMOTO YOSHIMI) 2 April 1996

## Description

This invention relates to a vehicle steering column assembly with a rake and/or reach adjustment means.

Rake adjustment of a steering wheel is the direction of adjustment whereby the steering wheel with its column, or at least part of it, can be raised or lowered. Reach adjustment enables the steering wheel to be moved towards and away from the driver.

In the event of a vehicle crash, a crash force is transmitted in reaction to the collision in a direction towards the front of the vehicle and away from the steering wheel. With a rake adjustable steering column and wheel, there is a tendency in crash conditions for the steering wheel to rise, thereby to cause injury to the driver.

The document JP-A-07232649, which concerns a steering column assembly according to the preamble of claim 1, discloses toothed means for preventing such a rising movement of the steering wheel when a vehicle crash occurs.

According to the present invention, there is provided a vehicle steering column assembly with an adjustment means, said assembly including a steering column having a lower end for coupling to a steering mechanism and an upper end to which a steering wheel can be coupled, and said adjustment means including a guiding member located in a guiding slot of the assembly, thereby to provide said adjustment; characterised in that said slot has an edge serving as a detent and said guiding member having engagement means to engage and lock with said detent edge, and there being a liner interposed between said detent edge and said engagement means so as normally to prevent such engagement and locking of said guiding member; and said liner being pierceable by said engagement means of said guiding member upon transmission of sufficient force through the steering column in a direction from said upper end towards said lower end thereof and thence to said guiding member, which thereby serves to prevent movement of the steering column in an adjustment direction by reason of said engagement.

The guiding slot may be located in a support bracket of the vehicle steering column assembly.

The edge of the guiding slot serving as a detent may be formed as a serrated edge and the guiding member may include a toothed part to pierce the liner and engage the serrated edge.

The guiding member of the adjustment means may include a block which rides in the guiding slot.

The vehicle steering column assembly can be a rake adjustable and/or a reach adjustable steering column assembly.

The invention also extends to a vehicle incorporating a vehicle steering column assembly.

For a better understanding of the invention and to show how the same may be carried into effect, reference will now be made, by way of example, to the accompanying drawing, in which:-
Figure 1 is a diagrammatic side view of a vehicle steering column assembly with a rake adjustment means, and
Figure 2 is an enlarged view of part of the assembly illustrated in Figure 1 and showing a modification which can be used in its own right or incorporated in the embodiment illustrated in Figure 1.

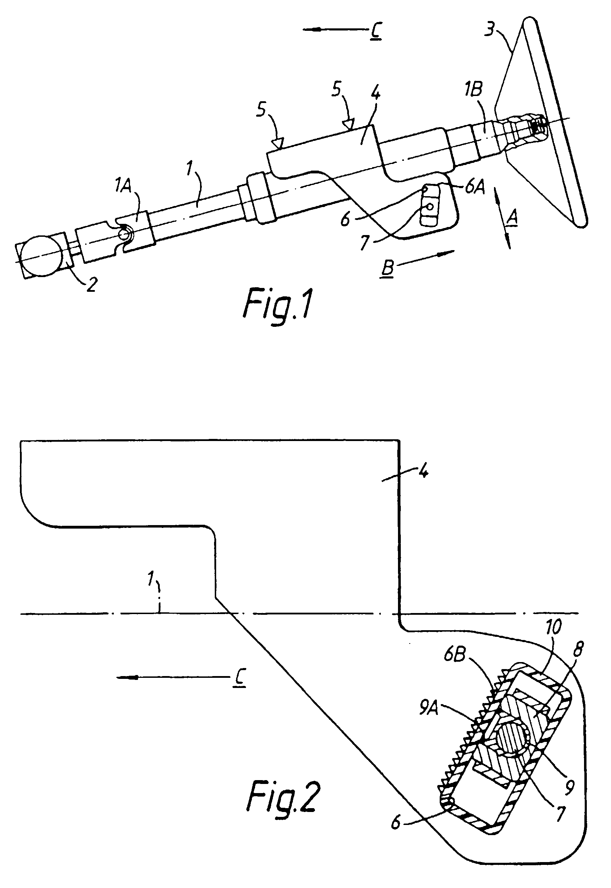

Referring to the drawing, Figure 1 shows a vehicle steering column assembly including a steering column 1 having a lower end 1A coupled to a steering rack 2 and an upper end 1B, to which a steering wheel 3 is coupled.

The steering column 1 is mounted by means of a support bracket 4 which is mounted at points 5 to another part of the vehicle.

The form of steering column assembly illustrated in Figure 1 is rake adjustable substantially in the directions of the double arrow A.

To facilitate this rake adjustment, at least one guiding slot 6 is cut into the support bracket 5 and is inclined rearwardly towards its upper end 6A. In other words, the slot 6 extends at an angle with respect to the major axis of the steering column 1 such that a guiding member 7 located in the guiding slot 6 to provide the rake adjustment travels, in use, from a lower part of the slot 6 to an upper part of the slot and towards the steering wheel end of the steering column as the steering column 1 is lifted. The guiding member 7 forms part of a clamping mechanism to clamp the steering column in the desired position.

It will be appreciated that, with the guiding slot 6 so angled, slight movement of the steering column will also be required in the direction of the arrow B, i.e. towards the driver, in order to allow the steering wheel 3 to be lifted. However, the purpose of the guiding slot 6 being so angled is so that, in a crash condition, when a crash force is transmitted from the steering wheel 3 towards the steering rack 2 substantially in the direction of the arrow C, lifting of the steering column 1 and thus the steering column 3 towards the driver is prevented to prevent injury to the driver, since the locking member 7 is prevented from riding up the angled slot 6 in the direction opposite to the direction of the force C.

Figure 2 illustrates an extension of the embodiment shown in Figure 1. The guiding member 7 for the adjustment of the steering column (in this case which can be rake and/or reach adjustable) is in the form of a clamp bolt mounted in a substantially rectangular block 8 by means of an insert 9 having hardened teeth 9A.

The block 8 is guided by and runs along a liner 10 of the guiding slot 6. The liner 10 may be made of a plastics material or other material softer than the teeth 9A of the insert 9.

As shown, one edge of the guiding slot 6 is provided with teeth 6B serving as a detent edge. The teeth 9A of the toothed insert 9 face the teeth 6B but, as can be seen, the liner 10 is normally interposed between the teeth of the insert and the teeth of the slot. Accordingly, the block 8 can slide freely within the slot 6 and along the slot liner 10.

However, in the event of a crash, forces are transmitted substantially in the direction of the arrow C (the same as in Figure 1) and this causes the teeth 9A of the insert 9 to be driven through the material of the liner 10 thereby to engage with the teeth 6B of the detent edge of the guiding slot 6. With the slot liner so pierced, the assembly is jammed, thereby to prevent especially rising movement of the steering wheel 3.

## Claims

1. A vehicle steering column assembly with an adjustment means, said assembly including a steering column (1) having a lower end (1A) for coupling to a steering mechanism (2) and an upper end (1B) to which a steering wheel (3) can be coupled, and said adjustment means including a guiding member (7) located in a guiding slot (6) of the assembly, thereby to provide said adjustment; characterised in that said slot has an edge (6B) serving as a detent and said guiding member (7) having engagement means (9A) to engage and lock with said detent edge, and there being a liner (10) interposed between said detent edge (6B) and said engagement means (9A) so as normally to prevent such engagement and locking of said guiding member (7); and said liner (10) being pierceable by said engagement means (9A) of said guiding member upon transmission of sufficient force through the steering column (1) in a direction from said upper end (1B) towards said lower end (1A) thereof and thence to said guiding member, which thereby serves to prevent movement of the steering column in an adjustment direction by reason of said engagement.

2. An assembly according to claim 1, wherein the edge of the guiding slot (6) serving as a detent is formed as a serrated edge (6B) and the guiding member (7) includes a toothed part (9A) to pierce the liner and engage the serrated edge.

3. An assembly according to claim 2, wherein the guiding member includes a block (8) which rides in the guiding slot.

4. An assembly according to claim 1, 2 or 3, wherein the assembly is a rake adjustable and/or a reach adjustable steering column assembly.

5. An assembly according to any one of the preceding claims, wherein said guiding slot (6) is located in a support bracket (4) of the vehicle steering column assembly.

6. A vehicle incorporating a vehicle steering column assembly according to any one of the preceding claims.

## Patentansprüche

1. Kraftfahrzeug-Lenksäulenanordnung mit einer Verstellvorrichtung, wobei die Anordnung eine Lenksäule (1) aufweist, die ein unteres Ende (1A) zum Kuppeln mit einem Lenkmechanismus (2) und ein oberes Ende (1B) hat, mit welchem ein Lenkrad (3) gekuppelt werden kann, und wobei die Verstellvorrichtung ein Führungsglied (7) aufweist, das in einem Führungsschlitz (6) der Anordnung angeordnet ist, um dadurch die Verstellung zu ermöglichen, **dadurch gekennzeichnet**, daß der Schlitz eine Kante (6B) hat, die als Anschlag dient, und daß das Führungsglied (7) ein Eingriffsmittel (9A) hat, um an der Anschlagkante anzugreifen und zu verriegeln, und wobei eine Auskleidung (10) zwischen der Anschlagkante (6B) und dem Eingriffsmittel (9A) angeordnet ist, um so normalerweise den Eingriff und das Verriegeln des Führungsglieds (7) zu verhindern, und daß die Auskleidung (10) durch das Eingriffsmittel (9A) des Führungsglieds bei Übertragung einer ausreichenden Kraft durch die Lenksäule (1) in einer Richtung von deren oberem Ende (1B) zu deren unterem Ende (1A) und von dort auf das Führungsglied durchstoßbar ist, welches dadurch dazu dient, eine Bewegung der Lenksäule in einer Verstellrichtung auf Grund des Eingriffs zu verhindern.

2. Anordnung nach Anspruch 1, bei der die Kante des Führungsschlitzes (6), die als Anschlag dient, als gerillte Kante (6B) ausgebildet ist und das Führungsglied (7) einen verzahnten Teil (9A) aufweist, um die Auskleidung zu durchstechen und an der gerillten Kante anzugreifen.

3. Anordnung nach Anspruch 2, bei der das Führungsglied einen Block (8) aufweist, der in dem Führungsschlitz gleitet.

4. Anordnung nach Anspruch 1, 2 oder 3, bei der die Anordnung eine in der Neigung verstellbare und/oder in der Längsrichtung verstellbare Lenksäulenanordnung ist.

5. Anordnung nach einem der vorhergehenden Ansprüche, bei der der Führungsschlitz (6) in einem Stützbügel (4) der Fahrzeug-Lenksäulenanordnung angeordnet ist.

6. Fahrzeug mit einer Fahrzeug-Lenksäulenanordnung nach einem der vorhergehenden Ansprüche.

## Revendications

1. Ensemble à colonne de direction de véhicule possédant un dispositif d'ajustement, l'ensemble comprenant une colonne de direction (1) ayant une extrémité inférieure (1A) destinée à être couplée à un mécanisme de direction (2) et une extrémité supérieure (1B) à laquelle peut être couplé un volant (3), le dispositif d'ajustement comprenant un organe de guidage (7) placé dans une fente de guidage (6) de l'ensemble pour assurer l'ajustement, caractérisé en ce que la fente a un bord (6B) utilisé comme organe d'encliquetage, et l'organe de guidage (7) possède un dispositif de coopération (9A) destiné à coopérer avec le bord d'encliquetage et à se bloquer sur celui-ci, un manchon (10) étant placé entre le bord d'encliquetage (6B) et le dispositif de coopération (9A) afin qu'il empêche normalement cette coopération et bloque l'organe de guidage (7), le manchon (10) pouvant être parcouru par le dispositif de coopération (9A) de l'organe de guidage lors de la transmission d'une force suffisante à la colonne de direction (1) dans la direction allant de l'extrémité supérieure (1B) vers l'extrémité inférieure (1A) de la colonne, et donc vers l'organe de guidage qui est ainsi utilisé pour empêcher le déplacement de la colonne de direction dans une direction d'ajustement grâce à cette coopération.

2. Ensemble selon la revendication 1, dans lequel le bord de la fente de guidage (6) utilisé comme organe d'encliquetage est formé par un bord crénelé (6B), et l'organe de guidage (7) possède une partie dentée (9A) destinée à percer le manchon et à coopérer avec le bord crénelé.

3. Ensemble selon la revendication 2, dans lequel l'organe de guidage comporte un bloc (8) qui se déplace dans la fente de guidage.

4. Ensemble selon la revendication 1, 2 ou 3, dans lequel l'ensemble est un ensemble à colonne de direction ajustable en inclinaison et/ou ajustable en longueur.

5. Ensemble selon l'une quelconque des revendications précédentes, dans lequel la fente de guidage (6) est disposée dans une équerre de support (4) de l'ensemble à colonne de direction de véhicule.

6. Véhicule comprenant l'ensemble à colonne de direction de véhicule selon l'une quelconque des revendications précédentes.
